(19) Europäisches Patentamt
European Patent Office
Office européen des brevets

(11) Publication number: **0 030 266**
**B1**

(12) **EUROPEAN PATENT SPECIFICATION**

(45) Date of publication of patent specification: **03.07.85**

(51) Int. Cl.$^4$: **H 02 M 7/155**

(21) Application number: **80106589.7**

(22) Date of filing: **27.10.80**

# (54) Transformerless power supply.

(30) Priority: **07.12.79 DE 2949347**

(43) Date of publication of application:
**17.06.81 Bulletin 81/24**

(45) Publication of the grant of the patent:
**03.07.85 Bulletin 85/27**

(84) Designated Contracting States:
**FR GB IT**

(56) References cited:
**DD-A- 114 729**
**DE-A-2 632 496**
**US-A-3 369 167**
**US-A-4 118 768**

(73) Proprietor: **Erwin Sick GmbH Optik-Elektronik**
**Sebastian-Kneipp-Strasse 1**
**D-7808 Waldkirch (DE)**

(72) Inventor: **Schörlin, Felix**
**Kolpingstrasse 3**
**D-7808 Waldkirch (DE)**

(74) Representative: **Dipl.-Phys.Dr. Manitz Dipl.-Ing. Finsterwald Dipl.-Ing. Grämkow Dipl.-Chem.Dr. Heyn Dipl.-Phys.Rotermund B.Sc. Morgan Robert-Koch-Strasse 1**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 030 266 B1

**Description**

The invention relates to a transformerless power supply for supplying a reduced DC operating voltage from an AC supply voltage to an electronic load device having low current requirements.

Transformerless power supplies are known, for example from DE—A—24 50 648 and US—A—37 33 737, which operate with self-oscillating relaxation circuits which are fed via a rectified voltage.

A further transformerless power supply is known from DE—AS—26 32 496 and is used to charge a battery. This known power supply is intended to supply power from a motor car alternator to the motor car battery which thus forms the load of the transformerless power supply. Further loads such as typically occur in a motor car will of course be connected in parellel with the battery during operation of the motor car and its alternator.

The object underlying the power supply of DE—A—26 32 496 is to combine the advantages of a longitudinal thyristor control for an alternator, which leads to optimum charging time for the battery, with the advantages of transverse thyristor control with regard to low losses and low operating noise of the alternator at high speeds of rotation. In other words, the known transformerless power supply is concerned with producing a high charging current which leads to ideal (short) charging time and with minimising the losses which occur in the AC power supply itself.

For this purpose the known transformerless power supply comprises a two way rectifier connected across the output of the alternator, a diode poled to pass the rectified current to the battery, with the diode being connected in a line leading from one terminal of the two way rectifier to one terminal of the battery, a controlled switch in the form of a thyristor connected across the output of the two way rectifier, and a control circuit which is arranged to close the switch when a predetermined voltage at the battery is exceeded.

The known arrangement operates in the following manner. The control circuit continuously senses whether the potential at the battery lies above a certain threshold, in which case the battery is fully charged, or below a certain threshold, in which case the battery needs to be recharged. In the former case a current is caused to flow through the control electrode for the thyristor which makes the thyristor conductive. Because the thyristor is conductive the output of the two way rectifier is completely short circuited and therefore no current flows to the battery via the aforementioned diode. This situation continues over many cycles of the AC supply voltage until such time as the battery potential drops below the threshold. When this occurs the control circuit is no longer able to send a current to the control electrode of the thyristor and the thyristor will cease conducting as soon as the output of the two way rectifier reduces to zero. At the start of the next wave cycle no current flows through the thyristor, because there is no current flowing through the control electrode, and the voltage starts to build up on the two way rectifier side of the diode. As soon as this voltage exceeds the sum of the voltage at the battery plus the forward voltage of the diode current starts to flow into the battery. The increasing voltage now present at the battery lies of course above the threshold value at which the control circuit normally sends a control current to the control electrode of the thyristor. However, the intention is now to charge the battery rather than to short circuit the alternator and the control circuit therefore includes elements which sense the buildup of voltage on the two way rectifier side of the diode (which only occurs if the two way rectifier is not already short circuited) and inhibit, via further circuitry, the sending of a control current to the control electrode of the thyristor by the threshold sensor for the battery potential.

The thyristor thus remains non-conductive, again over a large number of cycles of the AC supply, for as long as the threshold sensor for the battery potential senses, between each half cycle, that the potential of the battery lies below the potential in the fully charged state.

The known power supply is relatively complex involves one thyristor, two normal diodes, two transistors, two zener diodes and six resistors. Furthermore, in the charged state of the battery, a current permanently flows from the battery through the control circuit and through the thyristor and this current represents a continuous loss.

Having regard to this prior art the problem underlying the present invention is to provide a transformerless power supply which is inexpensive and simple, which takes up only a small amount of space, which has a negligible power loss (in terms of heat dissipation), which has a large operating voltage range and a large load current range and which produces a regulated output voltage.

These objects cannot be satisfied in a power supply which is stabilised by means of zener diodes because of the high power losses in the input resistor and also in the zener diode itself at higher operating voltages. Equally, an arrangement using longitudinal control, such as a variable resistor, cannot be considered because of the high voltages and power losses and also because of the complexity and cost of the circuitry.

In order to overcome the aforementioned problems there is provided, in accordance with the present invention and starting from the known power supply of DE—A—26 32 496, a transformerless power supply for supplying a reduced DC operating voltage from an AC supply voltage to a load connected across the output of the power supply, the apparatus comprising a two way rectifier, a diode poled to pass the rectified current to the load, a controlled switch connected across the output of the two way rectifier, wherein the controlled switch is closed when a predetermined voltage at the output of the power supply is exceeded, characterised in that, for driving an electronic load device having low current requirements, a first capacitor is connected across the output of the power supply parallel to the electronic load device; in that the controlled switch is arranged to close each time said predetermined voltage is exceeded and to open each time the input current reduces substantially to zero; and in that a second capacitor is connected between the AC supply voltage and the two way rectifier.

As a result of this arrangement the power supply itself gives rise to hardly any power loss. A wide operating voltage range and a wide load current range are obtained, as well as a regulated output voltage. The effort and complexity required to manufacture and to accommodate the power supply is minimal. The second capacitor, which is an important feature of the proposed power supply, can be regarded as lossless.

Ohmic resistors and, optionally, a damping capacitor can be arranged in front of the second capacitor and the two way rectifier.

The controlled switch is conveniently a thyristor as known per se from DE—A—26 32 496, and the thyristor as conveniently connected via a resistor 18 across the output of the two way rectifier.

The control electrode of the thyristor is expediently connected via a second diode poled in the same direction as the first diode to the line connecting the first diode and the first capacitor. The AC supply voltage is preferably the mains supply voltage.

The invention will now be described by way of example only and with reference to the accompanying drawings which show:

Fig. 1 a block circuit diagram of the transformerless power supply in accordance with the present teaching,

Fig. 2 a detailed circuit diagram of the presently proposed power supply,

Fig. 3 graphs of voltage and current against time for the individual circuit stages in the circuit diagrams of Figs. 1 and 2 with reference to any AC supply voltage within the supply voltage range which the power supply of the present teaching is able to convert into a constant DC voltage, and

Fig. 4 corresponding diagrams to those of Fig. 3 for an AC voltage at the lower limit of the operating voltage range of the power supply.

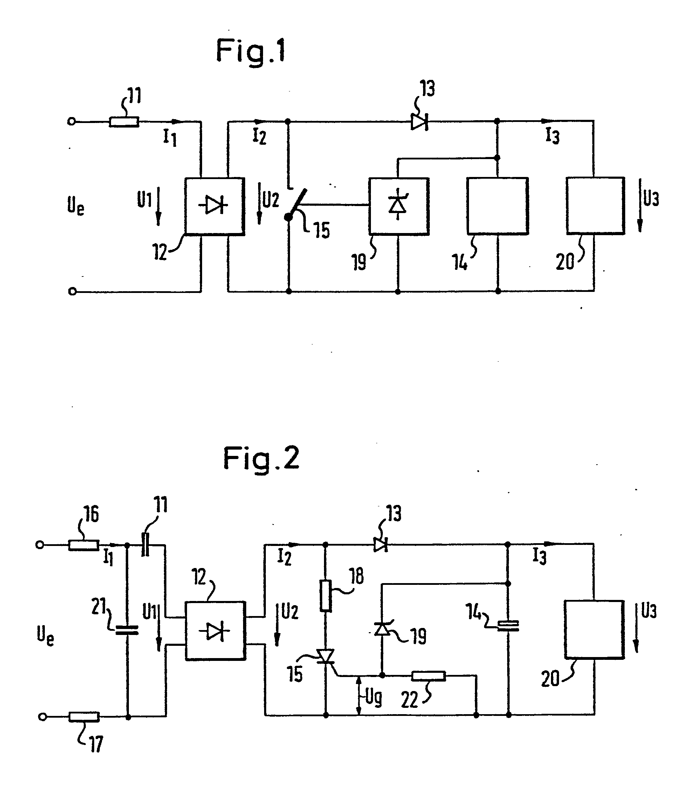

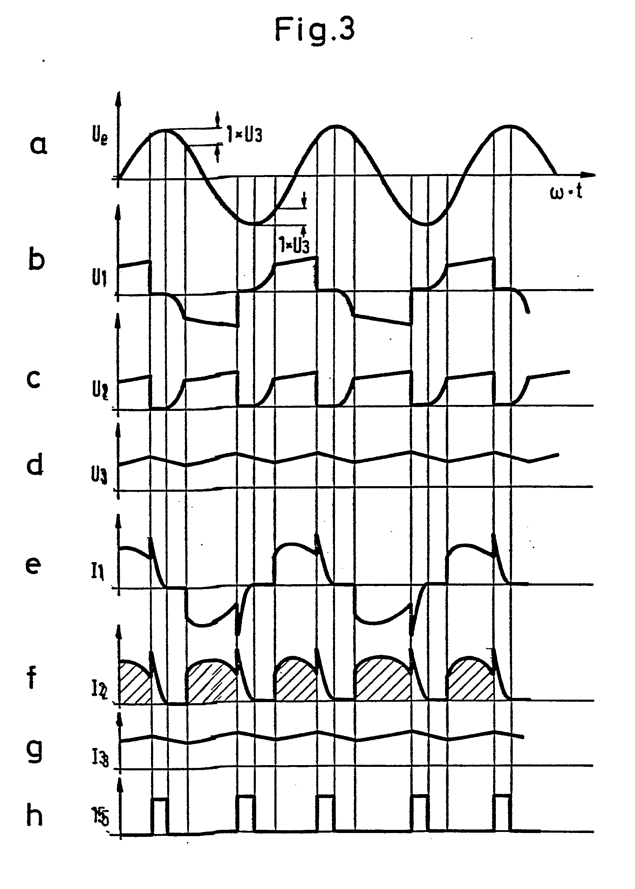

As seen in Fig. 1 the sinusoidal AC supply voltage reproduced in Fig. 3a is applied via a capacitor 11 to the input of a two way rectifier 12. The input potential U1 applied to the rectifier 12 is shown in Fig. 3b.

The time plot of the output potential U2 of the two way rectifier 12 is shown in the circuit diagram of Fig. 3c.

The output of the two way rectifier 12 is applied via a diode 13 which is poled to pass the output current of the rectifier 12 to a storage capacitor 14. An electronic device with a low current requirement is connected as a load to the storage capacitor 14.

A controlled switch 15 is additionally connected in parallel to the output of the two way rectifier 12. If a predetermined voltage at the storage capacitor 14 is exceeded the switch 15 is closed. The controlled switch 15 opens once again when the input or output current of the two way rectifier 12 reduces substantially to zero or passes through zero. The control circuit is illustrated in the form of a zener diode 19 to which the voltage at the storage capacitor 14 is applied.

As seen in Fig. 2 resistances 16, 17 are additionally connected in front of the capacitor 11 and the two way rectifier 12. The precise arrangement can be seen from Fig. 2.

The controlled switch takes the form of a thyristor 15 with an ohmic resistance 18 connected in series with the thyristor 15 across the output of the two way rectifier. The control electrode of the thyristor 15 is connected via the zener diode 19 to one terminal of the storage capacitor 14 and via an ohmic resistance 22 to the other pole of the storage capacitor 14.

The time plot of the voltage U3 at the load device 20 is reproduced in the diagram of Fig. 3d. The diagrams of Figs. 3e, f, g, and h show the time plots for the currents I1, I2, I3 and the current through thyristor 15 which result from the arrangement of the invention as shown in Fig. 2.

The hatched area of the current plot in Fig. 3f corresponds to the current through the diode 13.

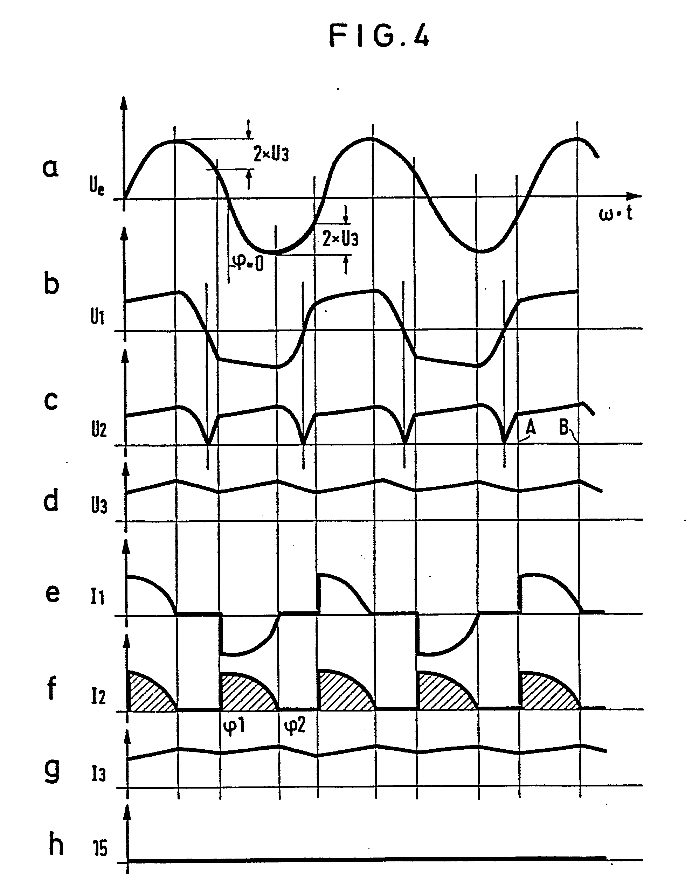

Fig. 4 shows corresponding diagrams to those of Fig. 3 for the minimum value of the AC supply voltage which is just able to be processed by the power supply. This minimal value is just sufficient to cover the current requirement of the load at the nominal voltage. At this minimal voltage the thyristor 15 has not quite been triggered. Along the region A—B in diagram C the voltage at the load U3 is the same as the voltage U2 at the output of the two way rectifier. The voltage U2 represents the absolute value of the voltage U1 applied to the input of the two way rectifier. The arrangement of the capacitor 11, in accordance with the present invention, in such that the diagrams shown in Fig. 4 are achieved at the minimum supply voltage that is to be processed. Fig. 4 and the graphs of Fig. 3 which illustrate the case of an intermediate supply voltage provide the significant reference points for the selection of the individual circuit elements. It is thus important for the invention that the circuit elements are so dimensioned and constructed that the diagrams of Fig. 3 are achieved for the centre AC simply voltages and the diagrams of Fig. 4 for the minimum AC supply voltage. The manner of operation of the power supply of the present proposal is as follows for any AC supply voltage within the operational range:

If one assumes that the storage capacitor 14 is discharged prior to applying the AC supply voltage $U_e$ then it can be seen that the capacitor 14 will charge via the components 16, 11, 12, 13, 14, 12 and 17 on connection to the AC supply voltage. As soon as the potential at the capacitor 14 reaches the zener potential at the diode 19 plus the potential Ug at the resistor 22 the thyristor 15 ignites and blocks the further flow of current from the supply to the storage capacitor 14. The thyristor 15 effectively short circuits the two way rectifier however without causing damage because of the presence of the capacitor 11, at the input to the two way rectifier. The capacitor does not constitute an ohmic resistance so that it does not dissipate power and thus does not give rise to any significant heat loss. The inclusion of the capacitor in the AC circuit in front of the two way rectifier 12 is very important because the other alternative, namely an ohmic resistance in the DC circuit after the two way rectifier would give rise to resistive heating losses.

When the thyristor 15 is closed the storage capacitor 14 discharges through the load device 20. A reverse flow via the thyristor 15 is prevented by the diode 13. If the current through the thyristor falls below the holding current then the thyristor is quenched and opens of its own accord. The flow of current to the storage capacitor 14 is only restored when the input voltage has changed by U3 because the output of the rectifier was held at 0 volts. The capacitor 14 is then recharged until U3 once again reaches the potential at the diode 19 and the thyristor 15.

The switching in and switching out thresholds can be found from the voltage and current diagrams of Fig. 3. A DC voltage having a ripple which is dependent on the load current is thus generated at the load device 20.

The capacitor 14 is sized in dependence on the desired ripple for the DC voltage U3. The zener diode 19 determines the level of the output voltage. The resistor 22 is responsible for the holding current of the thyristor. The capacitor 21 connected in parallel with the input to the two way rectifier 12 is sized in dependence on the desired high frequency damping. The resistors 16, 17 and 18 limit the current on switching of the thyristor. The capacitor 11, which forms a prime feature of the invention, is so arranged that the current requirement of the circuit connected to the storage capacitor 14 is just met at the minimum value of the AC supply voltage $Ue_{min}$.

The calculation for the capacitor 11 is made on the assumption that the storage capacitor 14 is very much larger than the capacitor 11 and that the sum of the resistance of the resistors 16, 17 is very much smaller than

$$\frac{1}{\omega C\,11}.$$

By way of example the following preferred values are given for the individual circuit elements.

Resistance 16: 68 ohms
Resistance 17: 68 ohms
Resistance 18: 68 ohms
Resistance 22: 470 ohms
Capacity of the capacitor 14: 47 µF (63 V)

For a maximum of current of 10 mA, an AC supply voltage Ue of 90 $V_{eff}$, a supply frequency of 50 Hz and an output voltage U3 of 48 V one arrives at a minimum value for the capacitor 11 of 0,63 µF.

**Claims**

1. A transformerless power supply for supplying a reduced DC operating voltage ($U_3$) from an AC supply voltage ($U_e$) to a load (20) connected across the output of the power supply, the apparatus comprising a two way rectifier (12), a diode poled to pass the rectified current to the load (20), a controlled switch (15) connected across the output of the two way rectifier (12), wherein the controlled switch is closed when a predetermined voltage at the output of the power supply is exceeded, characterised in that, for driving an electronic load device (20) having low current requirements, a first capacitor (14) is connected across the output of the power supply parallel to the electronic load device (20); in that the controlled switch (15) is arranged to close each time said predetermined voltage is exceeded and to open each time the input current reduces substantially to zero; and in that a second capacitor (11) is connected between the AC supply voltage and the two way rectifier (12).

2. A transformerless power supply in accordance with claim 1 and characterised in that ohmic resistors (16, 17) and, if required, a damping capacitor (21), are arranged in front of the second capacitor (11) and the two way rectifier (12).

3. A transformerless power supply in accordance with either of the preceding claims wherein the controlled switch is a thyristor (15), characterised in that the thyristor (15) is connected via a resistor (18) across the output of the two way rectifier (12).

4. A transformerless power supply in accordance with claim 3 and characterised in that the control electrode of the thyristor (15) is connected via a second diode (19) poled in the same direction as the first diode (13) to the line connecting the first diode (13) and the first capacitor (14).

5. A power supply in accordance with any one of the preceding claims and characterised in that the AC supply voltage ($U_e$) is the mains supply voltage.

**Patentansprüche**

1. Eine transformatorlose Stromversorgung zum Zuleiten einer reduzierten Betriebs-Gleichspannung ($U_3$) von einer Versorgungs-Wechselspannung ($U_e$) zu einer Last (20), die über den Ausgang der Stromversorgung geschaltet ist, wobei die Vorrichtung einen Zweiwege-Gleichrichter (12), eine zum Durchleiten des gleichgerichteten Stromes zu der Last (20) gepolte Diode, einen über den Ausgang des Zweiwege-Gleichrichters (12) angeschlossenen gesteuerten Schalter (15) enthält, und der gesteuerte Schalter geschlossen ist, wenn eine vorbestimmte Spannung am Ausgang der Stromversorgung überschritten ist, dadurch gekennzeichnet, daß zum Betrieb einer elekronischen Lasteinrichtung (20) mit geringen Stromanforderungen ein erster Kondensator (14) über den Ausgang der Stromversorgung parallel zur elektronischen Lasteinrichtung (20) angeschlossen ist; daß der gesteuerte Schalter (15) so angeordnet ist, daß er jedesmal schließt, wenn die vorbestimmte Spannung überschritten wird und jedesmal öffnet, wenn der Eingangsstrom im wesentlichen auf 0 abfällt, und daß ein zweiter Kondensator (11) zwischen der Versorgungs-Wechselspannung und dem Zweiwege-Gleichrichter (12) angeschlossen ist.

2. Eine transformatorlose Stromversorgung nach Anspruch I und dadurch gekennzeichnet, daß ohm'sche Wiederstände (16, 17) und erforderlischenfalls ein Dämpfungs-Kondensator (21) vor dem zweiten Kondensator (11) und dem Zweiwege-Gleichrichter (12) angeordnet sind.

3. Eine transformatorlose Stromversorgung nach einem der vorangehenden Ansprüche, wobei der gesteuerte Schalter ein Thyristor (15) ist, dadurch gekennzeichnet, daß der Thyristor (15) über einen Widerstand (18) über den Ausgang des Zweiwege-Gleichrichters (12) angeschlossen ist.

4. Eine transformatorlose Stromversorgung nach Anspruch 3 und dadurch gekennzeichnet, daß die Steuerelektrode des Thyristors (15) über eine zweite, in gleicher Richtung wie die erste Diode (13) gepolte Diode (19) an die die erste Diode (13) und den ersten Kondensator (14) verbindende Leitung angeschlossen ist.

5. Eine Stromversorgung nach einem der vorangehenden Ansprüche und dadurch gekennzeichnet, daß die Versorgungs-Wechselspannung ($U_e$) die Netzversorgungsspannung ist.

**Revendications**

1. Une alimentation sans transformateur destinée à appliquer à une charge (20) connectée à la sortie de l'alimentation une tension d'alimentation continue réduite ($U_3$), à partir d'une tension d'alimentation alternative ($U_e$), le dispositif comprenant un redresseur à double alternance (12), une diode orientée de façon à faire circuler le courant redressé vers la charge (20), un interrupteur commandé (15) connecté aux bornes de la sortie du redresseur à double alternance (12), cet interrupteur commandé étant fermé lorsqu'une tension prédéterminée est dépassée à la sortie de l'alimentation, caractérisée en ce que, pour attaquer un dispositif électronique de charge (20) consommant un courant faible, un premier condensateur (14) est connecté à la sortie de l'alimentation en parallèle sur le dispositif électronique de charge (20); en ce que l'interrupteur commandé (15) est conçu de façon à se fermer chaque fois que la tension prédéterminée est dépassée et à s'ouvrir chaque fois que le courant d'entrée est réduit pratiquement à zéro; et en ce qu'un second condensateur (11) est connecté entre la tension d'alimentation alternative et le redresseur à double alternance (12).

2. Une alimentation sans transformateur selon la revendication 1 et caractérisée en ce que des résistances ohmiques (16, 17) et, si nécessaire, un condensateur d'amortissement (21) sont disposés en amont du second condensateur (11) et du redresseur à double alternance (12).

3. Une alimentation sans transformateur selon l'une quelconque des revendications précédentes, dans laquelle l'interrupteur commandé est un thyristor (15), caractérisée en ce que le thyristor (15) est connecté par l'intermédiaire d'une résistance (18) aux bornes de la sortie du redresseur à double alternance (12).

4. Une alimentation sans transformateur selon la revendication 3 et caractérisée en ce que l'électrode de commande du thyristor (15) est connectée, par l'intermédiaire d'une seconde diode (19) orientée dans le même sens que la première diode (13), à la ligne qui connecte la première diode (13) et le premier condensateur (14).

5. Une alimentation selon l'une quelconque des revendications précédentes et caractérisée en ce que la tension d'alimentation alternative ($U_e$) est la tension d'alimentation du secteur.

Fig.1

11
13
I1
I2
I3
Ue
U1
U2
U3
12
15
19
14
20

Fig.2

16
11
13
I1
I2
I3
12
18
21
U1
U2
U3
14
Ue
19
15
Ug
22
20
17

Fig.3

a
Ue
1×U3
ω·t
1×U3
b
U1
c
U2
d
U3
e
I1
f
I2
g
I3
h
I5

FIG.4
a
Ue
2×U3
ω·t
φ=0
b
U1
c
U2
A
B
d
U3
e
I1
f
I2
φ1
φ2
g
I3
h
15